# EUROPEAN PATENT SPECIFICATION

(11) **EP 3 662 009 B1**
(45) Date of publication and mention of the grant of the patent: **14.02.2024**
(21) Application number: 18841998.0
(22) Date of filing: 01.08.2018
(51) Int. Cl.: C08K 5/04, C08K 5/17, C09J 133/02, C09J 9/00

(54) **ADHESIVE FORMULATIONS AND ASSOCIATED METHODS AND PRODUCTS**
KLEBSTOFFZUSAMMENSETZUNGEN UND ZUGEHÖRIGE VERFAHREN UND PRODUKTE
FORMULATIONS ADHÉSIVES ET PROCÉDÉS ET PRODUITS ASSOCIÉS

(30) Priority: 01.08.2017 US 201762539913 P
(43) Date of publication of application: 10.06.2020
(73) Proprietor: Sanford L.P., Atlanta GA 30328 (US)
(72) Inventor: FOSTER, Van R., Westerville, OH 43081 (US); KREFT, Joseph Wayne, Gainesville, GA 30506 (US); PATEL, Yogeshbhai Babubhai, Reynoldsburg, OH 43068 (US)
(74) Representative: Page White Farrer
(86) International application number: PCT/US2018/044752
(87) International publication number: WO 2019/028108

(56) References cited:
- WO-A1-2017/096169
- US-A- 5 773 492
- US-A1- 2013 059 954

## Description

### CROSS-REFERENCE TO RELATED APPLICATIONS

This application claims the benefit of priority to U.S. Provisional Application No. 62/539,913, filed August 1, 2017.

### BACKGROUND

Formulations of non-toxic adhesives for use as glue sticks typically do not deliver the strength necessary for application on substrates other than stationary products (e.g., paper). Commercially available glue stick formulas and products typically utilize either polyvinylpyrrolidone (PVP) or a modified-polyvinyl acetate (PVA) polymer. PVP-based formulas provide good ease of lubricity, package stability and better adhesion compared to modified-PVA formulas; however, modified PVA-based adhesives can be formulated to deliver faster adhesion development than PVP-based formulations. Further, PVP is typically provided as a high-viscosity fluid at room temperature or as a powder, such that dissolving the raw material in water at a high temperature is required for processing. Most noted is the poor adhesion of these current chemistries to various non-stationary products such as those used for crafting, and more robust project demands. Therefore, there is an ongoing need for glue stick formulas that provide high strength to bond materials other than paper, and that may provide one or more other qualities found in traditional glue sticks (e.g., ease of lubricity, package stability, retractability inside glue stick tube barrel).

WO 2017/096169 A1 describes oxazoline-based adhesive formulations.

US2013/0059954 A1 describes glue stick formulated with acrylic dispersions.

US 5,773,492 describes a lamellar pigment particle dispersion.

### DETAILED DESCRIPTION

The present invention according to the appended claims relates to a method for preparing adhesive formulations. These formulations are non-toxic and display notable strength with stationary and non-stationary substrates (e.g., ceramics, fabrics, wood, pasta, glitter, felt, and other crafting substrates for which typical adhesive sticks deliver moderate to unreliable adhesion performance).

In addition to those adhesive stick chemistries mentioned above, higher strength adhesive stick formulations developed have utilized polyurethane chemistries. However, these materials and often do not meet consumers' strength, usability and multi-substrate application needs. The present disclosure relates to formulations that do not contain polyurethane chemistry. Instead, these formulations are based on an acrylic polymer system. Prior work on adhesive formulations containing acrylic dispersions is described in U.S. Patent Application Publication No. US 2013/0059954. The acrylic polymer system may vary in percent solids and may be any suitable polymer or copolymer acrylic system. Such acrylic polymers may have any suitable degree of functionalization, and may utilize a variety of crosslinking methods to effect crosslinking between polymer strands.

In the method according to the present invention, an adhesive formulation prepared contains an acrylic polymer system, a solvent, a defoaming agent, an organic amine, a silane based adhesion promoter or any other suitable and compatible adhesion promoter, a caustic solution, and a processing oil. The formulation also includes a fatty acid. The formulation may contain a colorant. The formulation may contain an acrylic polymer system present in an amount from about 50 to about 75 percent, such as from about 52 to about 75 percent, by weight, a solvent present in an amount from about 4 to about 15 percent, such as from about 8.5 to about 13 percent, by weight, a defoaming (i.e., anti-foam) agent present in an amount from about 0.1 to about 0.5 percent, such as about 0.2 to about 0.4, by weight, an organic amine present in an amount of from about 0.01 to about 5 percent, such as from about 0.01 to about 4.5 percent, by weight, a silane based adhesion promoter present in an amount of from about 0.01 to about 0.5 percent, such as about 0.01 to about 0.3 percent by weight, a caustic solution present in an amount of from about 3 to about 20 percent, such as about 3 to about 17 percent, about 10 to about 20 percent, or about 10 to about 17 percent, by weight, and a processing oil present in an amount of from about 1 to about 5 percent, by weight. For example, the formulation may also contain a fatty acid in an amount of from about 2 to about 5 percent, by weight. For example, the formulation may also contain a colorant in an amount of from about 0.05 to about 1 percent, such as from 0.06 to about 0.6 percent, by weight.

The fatty acid may be a sodium stearate. This fatty acid may contain any variety of chain lengths and functionalities suitable for creation of the stick product or any lower viscosity possible formula for other non-stick applications. The formulation may not contain the sodium stearate component, in order to create a formula of a fluid state of matter in which the adhesive may be termed a pourable adhesive.

The solvent may be water, such as deionized water. The caustic solution may be a sodium hydroxide solution. The caustic agent may be present in solution in an amount of from about 10 to about 50 percent in water, such as from about 30 to about 40 percent in water, such as from about 35 to about 40 percent in water. Thus, the amount of caustic agent present in the formulations described herein may be higher than previously thought necessary. For example, the caustic agent may be provided in solution in an amount of about 37.5 percent in water. The processing oil may be glycerin.

It has been found that such formulations including one or more acrylic polymers that function as the primary polymer system achieve a higher level of adhesion upon setting (i.e., once the formulation has dried completely) than traditional formulations. This improvement in adhesion was found to be even more significant for a variety of additional substrates outside of typical stationary, such as ceramics, fabrics, wood, pasta, glitter, felt, and other crafting substrates for which typical adhesive sticks delivered unreliable adhesion. Further, it has been discovered that the inclusion of the silane based adhesion promoter provides increased adhesion to substrates of varying porosity, while not sacrificing the ability to be laid down onto the substrate with an acceptable degree of ease.

It has also been discovered that the optional color additive is stabilized by inclusion of an organic amine (e.g., 2-amino-2-methyl-1-propanol, a.k.a., AMP-95) in the formulation. The colorant may be selected to have a color during application that disappears upon drying of the formulation. In addition to those that disappear upon drying, other colorants that change from one color to another upon drying of the formulation can be considered for alternative applications. This can include a variety of redox chemistries, transition metal complexes, or reactive chemistries that result in a color or color change occurring both within and outside of the spectrum of visible light. The colorant may also be physically or chemically housed within the formulation which may release the above possible colorant chemistries under a variety of processes including breaking open of encapsulated component colorant chemicals described above.

It is believed that the amine component allows for the color to be maintained for a longer-term shelf life of the end product in the packaged container. The formulation may be a colorless/white/opaque formulation by removal of the colorant additive from the formulation or by subjecting the formulation to a suitable chemical change such that the colorant appears colorless before and after drying accept when later chemical conditions are adjusted such that the color may return if so desired.

Various suitable methods of manufacturing the above-described formulations are envisioned. For example, methods include mixing the acrylic polymer(s) in water with the defoaming agent at room temperature and heating the mixture to a temperature of up to about 80°C. Next, the fatty acid may be added and the mixture may be mixed for at least about 40 minutes. Next, the caustic solution may be added, such as in the increased amounts described above, and the mixture may be mixed for 90 minutes or more. For, example, during mixing, the pH of the mixture may be monitored and it has been determined that mixing should be continued until the pH has become stable after the complete neutralization of the polymers. For example, a stable pH may be demonstrated by changes in pH of no greater than about 10%, such as about 5%, or about 1%, over a predetermined period of time, such as about 1 to about 5 minutes of mixing. It has been discovered that neutralization of the acrylic polymers via extended mixing times and increasing the amount of caustic agent, as indicated by pH stability of the formulation, provides an improved acrylic polymer based adhesive formulation. Next, the remaining ingredients may be mixed into the formulation.

For example, a method of manufacturing an adhesive formulation such as those described above includes mixing the acrylic polymer(s) in water, and half of the defoaming agent together at room temperature in a suitable mixing kettle having appropriate mixing capability for the increased viscosity that is to follow completion of the mixed formula. After briefly mixing these, the kettle and mixture is to be brought to about 70-78°C. Once up to temperature, the stearate or other fatty acid of choice may be added in thirds, with 5-10 minutes of mixing after each addition until the entire amount has been added to the mixing kettle. Scraping solids into the solution after each mixing increment, prior to every next addition is also beneficial. This mixture may be mixed for at least 40-50 minutes total mixing time post defoamer addition at 75-79°C. Longer mixing at slightly high yet moderate rates of agitation may be needed and should be continued until a homogeneous solution nearly free of fatty acid (e.g., stearate) agglomerations is achieved.

Once this is achieved, the caustic solution may be added and mixed for 90 minutes or more depending on the volume of the batch, agitation speed and blades selected. As discussed above, the pH may be monitored during this mixing time and mixing should be extended until the pH has become very stable post-complete neutralization of the polymers. It is a good indication that the mixing time or the blade system used at this step was insufficient if the final cooled adhesive stick product in the tube is not firm and is instead soft and gel-like. If sufficient mixing is used and appropriate pH stability is achieved, then the end product stick should be firm upon application to the substrate. It has been observed that the addition of a caustic solution and subsequent increase in pH generates a marked increase in viscosity. Without intending to be bound by any particular theory, it is believed that, because of this phenomena, use of a specific mixing apparatus facilitates optimal neutralization and homogeneity of the batch. For example, in some embodiments, a double planetary mixing unit having a side-wall scraping blade may be used. Without intending to be bound by any particular theory, it is believed that use of this mixing system ensures a maximized shelf life stability, particularly leading to color stability after the pH is finalized to the appropriate level post polymer neutralization.

After a homogeneous solution is attained, glycerin or another processing oil may be added and again mixed for 10 minutes or more. Some of the glycerin may be held back and used to wet out the colorant additive if it is a solid material, which may be added next. This mixture may be mixed for 10 or more minutes and after mixing, and the second half of the defoaming agent may then be added and mixed for 5 minutes. Then the adhesion promoter is added to the mixture and mixed 5 or more minutes.

Next, the organic amine may be added and mixed into solution for about 10 minutes. After 10 minutes, the mixing kettle walls should be scraped as should the agitation arms. Once scraped, additional mixing for about 5-10 minutes may be completed. At this point, it may be helpful to confirm that no white adhesive remains and that the organic amine has made intimate contact with all other components. If the color depth and tone darkness desired is not achieved by this point, then a small addition of an aliquot of organic amine plus a small amount of caustic solution may be added to the vessel under moderate mixing to adjust the color. Care must be taken not to over-add these alkaline solutions creating a situation where the pH is too high which can cause the color to be overly stable and not disappear completely upon drying on the substrate.

Next, while the kettle is still sealed and mixing with 70-75°C heat, vacuum is pulled on the blended formulation under low agitation. While monitoring for at least 30 minutes time, vacuum is pulled with intermittent breaks in vacuum to ensure no over flow into the upper half of the kettle or vacuum system. The adhesive formulation then is kept as close to the processing temperature as possible while being distributed via positive pressure injection filling into individual containers of choice.

One optional additional manufacturing step that can be taken to optimize the stability of the final end product is, after each ingredient addition is made (beginning just prior to the addition of the fatty acid), the mixing vessel can be purged with nitrogen (N₂) gas. This may be done during each mixing step in an attempt to decrease the presence of any reactive gases being mixed into the batch. This is especially useful after addition of colorant and in the final steps of the manufacturing process. In some embodiments, other inert gasses such as Argon, and other nobel gases or mixtures thereof may be used to purge the mixing vessel.

## Claims

1. A method of making an adhesive formulation, comprising:
combining an acrylic polymer system, a solvent, and a defoaming agent to form a mixture;
heating the mixture to a temperature of from 70°C to 80°C;
adding a fatty acid to the heated mixture;
subsequently adding a caustic solution to the heated mixture and mixing until the pH of the mixture is stable after neutralization of the acrylic polymer system;
adding a processing oil to the heated mixture;
adding an adhesion promoter to the heated mixture; and
adding an organic amine to the heated mixture.

2. The method of claim 1, wherein the adhesive formulation contains:
the acrylic polymer system in an amount from 50 to 75 percent, by weight;
the solvent in an amount from 4 to 15 percent, by weight;
the defoaming agent in an amount from 0.1 to 0.5 percent, by weight;
the organic amine in an amount of from 0.01 to 5 percent, by weight;
the adhesion promoter in an amount of from 0.01 to 0.5 percent, by weight;
the caustic solution comprising a caustic agent present in water in an amount of from 30 to 40 percent, in an amount of from 3 to 20 percent, by weight; and
the processing oil in an amount of from 1 to 5 percent, by weight.

3. The method of any one of claims 1 or 2, wherein the mixing occurs in a double planetary mixing unit comprising a side-wall scraping blade.

## Patentansprüche

1. Verfahren zur Herstellung einer Klebstoffformulierung, aufweisend:
Kombinieren eines Acrylpolymersystems, eines Lösungsmittels und eines Entschäumungsmittels, um eine Mischung zu bilden;
Erhitzen der Mischung auf eine Temperatur von 70°C bis 80°C;
Zugeben einer Fettsäure zur erhitzten Mischung;
anschließend Zugeben einer kaustischen Lösung zur erhitzten Mischung und
Mischen, bis der pH-Wert der Mischung nach Neutralisation des Acrylpolymersystems stabil ist;
Zugeben eines Verarbeitungsöls zur erhitzten Mischung;
Zugeben eines Haftvermittlers zur erhitzten Mischung; und
Zugeben eines organischen Amins zur erhitzten Mischung.

2. Verfahren nach Anspruch 1, wobei die Klebstoffformulierung enthält:
das Acrylpolymersystem in einer Menge von 50 bis 75 Gewichtsprozent;
das Lösungsmittel in einer Menge von 4 bis 15 Gewichtsprozent;
das Entschäumungsmittel in einer Menge von 0,1 bis 0,5 Gewichtsprozent;
das organische Amin in einer Menge von 0,01 bis 5 Gewichtsprozent;
den Haftvermittler in einer Menge von 0,01 bis 0,5 Gewichtsprozent;
wobei die Ätzlösung ein Ätzmittel aufweist, das in Wasser in einer Menge von 30 bis 40 Prozent, in einer Menge von 3 bis 20 Gewichtsprozent, vorhanden ist; und
das Verarbeitungsöl in einer Menge von 1 bis 5 Gewichtsprozent.

3. Verfahren nach einem der Ansprüche 1 oder 2, wobei das Mischen in einer Doppelplaneten-Mischeinheit erfolgt, die eine Seitenwand-Abstreifklinge aufweist.

## Revendications

1. Procédé de fabrication d'une formulation adhésive, consistant à :
combiner un système polymère acrylique, un solvant et un agent antimousse afin de former un mélange ;
chauffer le mélange à une température comprise entre 70°C et 80°C ;
ajouter un acide gras au mélange chauffé ;
ajouter ensuite une solution caustique au mélange chauffé et mélanger jusqu'à ce que le pH du mélange soit stable après neutralisation du système polymère acrylique ;
ajouter une huile de traitement au mélange chauffé ;
ajouter un promoteur d'adhérence au mélange chauffé ; et
ajouter une amine organique au mélange chauffé.

2. Procédé selon la revendication 1, dans lequel la formulation adhésive contient :
le système polymère acrylique dont la quantité en pourcentage en poids est comprise entre 50 et 75 ;
le solvant dont la quantité en pourcentage en poids est comprise entre 4 et 15 ;
l'agent antimousse dont la quantité en pourcentage en poids est comprise entre 0,1 et 0,5 ;
l'amine organique dont la quantité en pourcentage en poids est comprise entre 0,01 et 5 ;
le promoteur d'adhérence dont la quantité en pourcentage en poids est comprise entre 0,01 et 0,5 ;
la solution caustique comprenant un agent caustique présent dans l'eau dont la quantité en pourcentage en poids est comprise entre 30 et 40, dont la quantité en pourcentage en poids est comprise entre 3 et 20 ; et
l'huile de traitement dont la quantité en pourcentage en poids est comprise entre 1 et 5.

3. Procédé selon l'une quelconque des revendications 1 à 2, dans lequel le mélange a lieu dans une unité de mélange planétaire double comprenant une lame de raclage de paroi latérale.
